# EUROPEAN PATENT SPECIFICATION

(11) **EP 2 949 982 B1**
(45) Date of publication and mention of the grant of the patent: **03.01.2018**
(21) Application number: 15160142.4
(22) Date of filing: 20.03.2015
(51) Int. Cl.: F16L 13/14, F16L 37/098

(54) **Improved Push-Fit pipe coupling**
Verbesserte Steckrohrkupplung
Amélioration d'un accouplement de tuyau enfichable

(30) Priority: 28.05.2014 GB 201409462
(43) Date of publication of application: 02.12.2015
(73) Proprietor: Pegler Yorkshire Group Limited, Doncaster South Yorkshire DN4 8DF (GB)
(72) Inventor: Raper, Nigel, Yorkshire, LS22 6WH (GB); Rhodes, David, Yorkshire, YO18 8TF (GB)
(74) Representative: Wilson Gunn

(56) References cited:
- EP-A1- 2 246 605
- WO-A1-2009/121418
- DE-A1- 19 702 289
- US-A1- 2003 038 481
- US-B1- 6 224 114

## Description

### Technical Field of the Invention

The present invention relates to push-fit pipe couplings.

### Background to the Invention

When connecting pipes together, one common form of coupling is a push-fit pipe coupling. This involves aligning pipes in a pipe coupling, and subsequently crimping the coupling using a crimping tool to provide a tight seal between the pipe and the coupling. Such pipe couplings are often provided with a rubber sealing ring that sits inside the coupling to provide a water tight seal once the coupling has been crimped. Couplings of a similar type are known from EP 2 246 605 A1, WO 2009/121418 A1, DE 197 02 289 A1, US 6 224 114 B1, and US 2003/038481 A1. When installing a system of pipes, installers often prepare large sections of pipe-work at a time. This typically involves aligning and inserting many pipes into pipe couplings and pipe support brackets. Subsequently, the installer returns to each coupling in turn to crimp the coupling, sealing and securing the joint.

During installation of brackets and multiple couplings, it is common for pipes to be disturbed and move out of position whilst subsequent joints are being prepared. If such disturbances are small and difficult to detect, the installer may not notice the pipe is incorrectly positioned and may proceed to crimp and secure the joint with the pipe sitting slightly out of place. In such circumstances, even a small disturbance of the pipe from its correct position can cause a significantly weakened joint, which is likely to break or leak at a later stage. This may require repair work or even replacement, increasing the time and cost of installation. In such cases that the weak joint fails at a significantly later time, additional problems of access and repair work are caused.

It is therefore an object of the present invention to at least partially overcome or alleviate the above problem.

### Summary of the Invention

According to the present invention there is provided a push fit pipe coupling for securing an inserted pipe in the coupling prior to crimping, the coupling comprising: a body comprising an inner surface, the body being adapted for receiving the inserted pipe for coupling; and one or more retaining means provided inside the body, wherein the or each retaining means comprises one or more retaining members and at least part of the one or more retaining members extends toward the inner surface of the body of the coupling and is arranged to grip an inner surface of the inserted pipe; characterised in that the retaining means comprises one or more protruding tabs secured to the inner surface of the body of the coupling.

The retaining members may comprise an engaging end that is spaced apart from the inner surface of the body of the coupling. Such an arrangement allows a pipe to be inserted into the coupling, more specifically into the space between the inner surface of the coupling and the engaging ends of the retaining members, but provide resistance against the pipe moving out of the coupling by gripping the inner surface of said pipe. Gripping the interior surface of the pipe prior to crimping in this way means many pipe joints can be prepared securely as the movement of the prepared pipes prior to crimping is significantly reduced, hence avoiding weak joints being formed. Gripping the interior surface rather than the outside of the pipe advantageously allows a secure joint to form between the outer surface of the pipe and the inner surface of the coupling during crimping.

The body may be substantially tubular. The body may be any suitable shape, including but not limited to: straight; curved around approximately 90°; a shallower curve; a 'T' shape; a 'Y' shape; or a cross shape. The body may be 'double-ended', i.e. arranged to receive an inserted pipe at each end, so as to join two pipes. Alternatively, the coupling may be integrally formed on the end of an existing pipe.

The retaining means comprises one or more protruding tabs secured to the inner surface of the body of the coupling. The tabs may be secured to the inner surface of the coupling by way of screws, bolts, adhesive, or other suitable bonding means. Alternatively, the tabs may be adapted to fit into grooves or slots provided on the inner surface of the coupling. The tabs and retaining means act as stops to prevent the inserted pipe being inserted further into the body than required. Such an arrangement advantageously provides a quick and convenient depth gauge for the installer, meaning they do not have to mark the required depth before preparing joints for crimping.

In some embodiments, the inner surface of the body of the coupling may be provided with a protruding shoulder or lip. The retaining means may be secured directly to the shoulder or lip. The retaining means may be secured to the shoulder or lip by way of screws, bolts, adhesive, or other bonding means. Similarly to the above embodiment, retaining means secured to the shoulder or lip act as a stop and prevent the inserted pipe being inserted further than required. Alternatively, the shoulder or lip itself can act as a stop and may be supportive of an inserted pipe for stopping.

In some embodiments, the inner surface of the coupling may be provided with a groove or indent. The dimensions of the groove and retaining means may be chosen such that the retaining means fits securely into the groove.

The retaining members may comprise substantially hook shaped projections. In such embodiments, the members may project toward the end of the coupling adapted to receive an inserted pipe, and have an engaging end that is curved back toward the inner surface of the coupling and the retaining means. The hook shape may be curved and substantially smooth. Alternatively, the hook shape may comprise one or more substantially straight sections angled into a hook shape. Such an arrangement enables the retaining members to allow insertion of a pipe but resist removal, as the engaging end will provide resistance to withdrawal of the pipe by 'digging in' to the inner surface of the pipe.

Alternatively, the retaining means may comprise a single retaining member, wherein the retaining member may be a skirt extending axially and radially outward from the body of the retaining means toward the inner surface of the body of the coupling. The profile of the skirt may be substantially hook shaped. The skirt may extend from substantially the whole circumference of the retaining means. Such an arrangement enables the retaining member to allow insertion of a pipe but resist removal in a similar way to the previous embodiment.

The retaining members form part of a retaining means. The retaining means may comprise a ring from which the retaining members project. The retaining means may be secured to the inner surface of the coupling by any suitable means.

The coupling may additionally comprise a sealing ring. The sealing ring may be provided on an internal shoulder or groove of the coupling body. The sealing ring may comprise an O-ring. The sealing ring dimensions may be selected to enable a seal to be formed between the coupling and an inserted pipe.

### Detailed Description of the Invention

In order that the invention may be more clearly understood an embodiment/embodiments thereof will now be described, by way of example only, with reference to the accompanying drawings, of which:
- Figure 1: is a schematic diagram of a cut-out view of a pipe coupling according to the present invention;
- Figure 2: is a schematic diagram of a pipe coupling according to the present invention;
- Figure 3: is a schematic diagram of a retaining means according to the present invention;
- Figure 4: is a schematic diagram of a 'T' shaped pipe coupling according to the present invention.
- Figure 5: is a schematic diagram showing a retaining member according to the present invention engaging with an inserted pipe

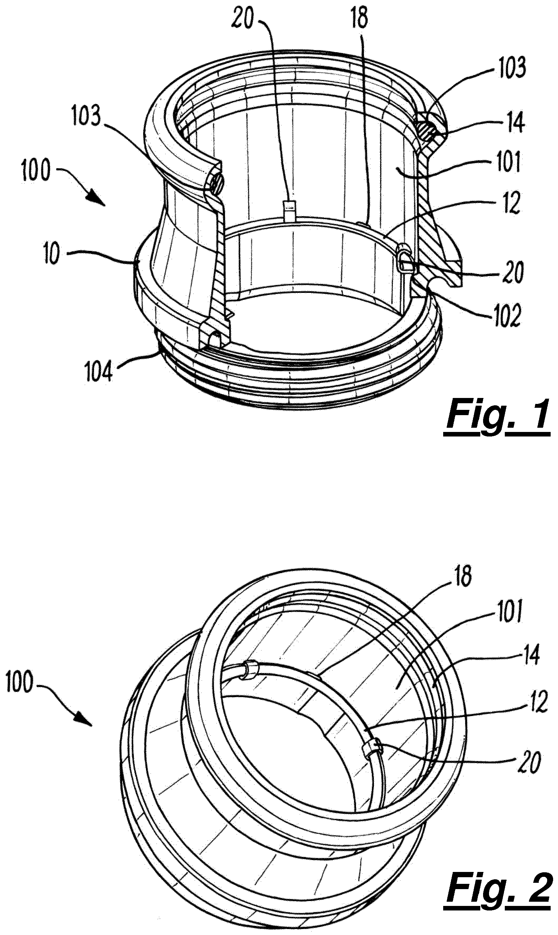

Figures 1 and 2 show a pipe coupling 100 according to the present invention, provided with a retaining means 12 and a sealing ring 14. The coupling 100 is adapted such that when a pipe is inserted into the body 10 of the coupling 100, it is held in place by the retaining means 12, which offers resistance to the pipe being withdrawn.

The retaining means comprises a body 16, a plurality oftabs 18 and a plurality of retaining members 20. The tabs 18 extend from the body 16 toward the inner surface 101 of the coupling, and provide a means to secure the retaining means 12 to the body 10 of the coupling. In some embodiments, the tabs 18 are screwed or adhered to the inner surface 101 of the coupling.

In this embodiment, the inner surface 101 of the body of the coupling is provided with a shoulder 102. The body 16 and tabs 18 of the retaining means sit on the shoulder 102 and are secured by way of adhesive. The body 10 of the coupling may also be provided with a screw thread 104 that is engagable with a corresponding screw thread provided on a secondary device, such as an end stop or another pipe or coupling, so as to allow the coupling to be securely joined to such a device.

The skilled man will appreciate that whilst a single ended coupling is shown in the figures, a coupling according to the present invention could easily be adapted to be a double-ended coupling, provided with a retaining means and sealing ring at each end. In this context, two pipes could be joined by the coupling.

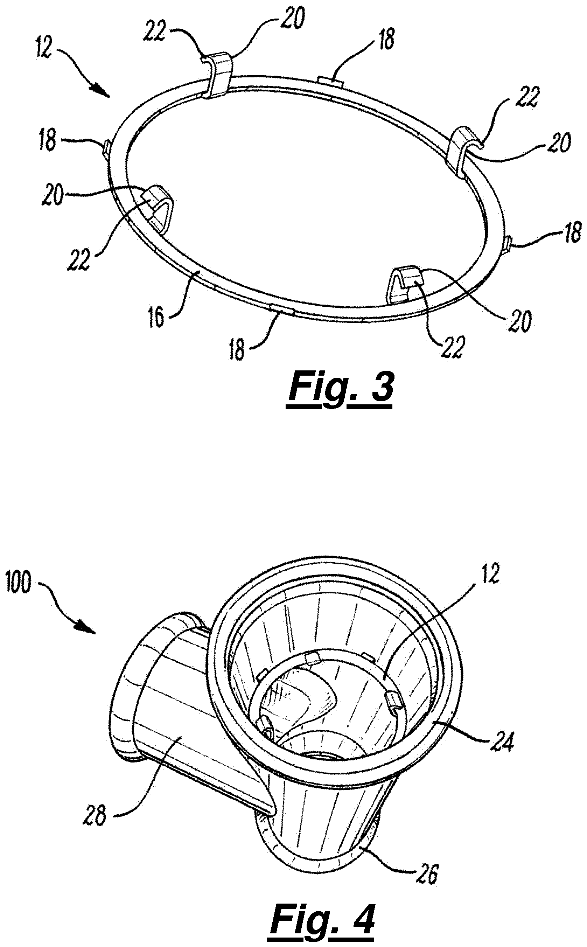

Turning now to figure 3, the retaining means 12 is provided with a plurality of retaining members 20. The retaining members 20 are substantially hook shaped, and project inwardly away from the body 16 of the retaining means and axially toward the receiving end of the coupling. The retaining members 20 are provided with an engaging end 22. The engaging end 22 projects back in axially away from the receiving end of coupling and outwardly toward the inner surface 101 of the coupling, forming a hook shape. Such an arrangement allows a pipe to be received between the engaging end 22 of the retaining members 20 and inner surface 101 of the coupling.

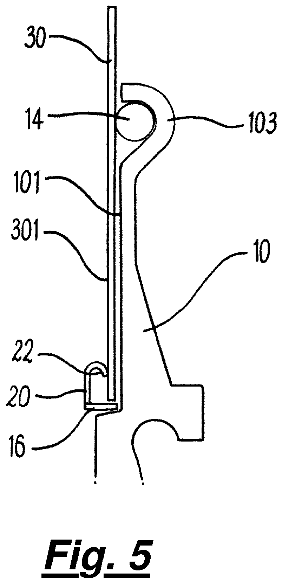

When the pipe is inserted, the engaging end 22 of the retaining members 20 engages with the inner surface 301 of the inserted pipe 30, and provides resistance to withdrawal of the pipe 30. This is shown more clearly in figure 5.

The arrangement of the retaining means 12 additionally acts as a stop to prevent the pipe 30 being inserted beyond the desired depth.

Such an arrangement ensures that pipes inserted into the coupling are securely held in place and will not be dislodged prior to crimping. This enables an installer to align and prepare multiple couplings throughout a pipe system, before returning to crimp each coupling in turn, without compromising the quality of the joins. This is quick and convenient for the installer and additionally acts as a convenient depth gauge. By stopping the pipe being inserted too far, the retaining means eliminates the need for the installer to mark the pipes with depth indicators prior to assembling the joins.

The coupling is also provided with a sealing ring 14. The sealing ring is an O-ring and is made of rubber and provided within a groove 103 in the wall of the coupling. When the coupling has been crimped, the sealing ring 14 provides a watertight seal between the coupling 100 and the inserted pipe.

Turning now to figure 4, an alternative embodiment of the present invention is shown, wherein the coupling 100 is 'T' shaped. Such an arrangement allows three pipes to be inserted into the coupling and therefore securely joined. In such an embodiment, the coupling is provided with three retaining means 12, one positioned in each of the three arms 24, 26, 28 of the 'T' shaped coupling. Such an arrangement allows all three inserted pipes to be held securely prior to crimping. Similarly, the coupling may be provided with three sealing rings (not shown), one in each arm 24, 26, 28.

The skilled man will of course appreciate that other shapes and angles of the coupling are possible.

The above embodiments are described by way of example only. Many variations are possible without departing from the scope of the invention as defined in the appended claims.

## Claims

1. A push fit pipe coupling (100) for securing an inserted pipe (30) in the coupling (100) prior to crimping, the coupling (100) comprising: a body (10) comprising an inner surface (101), the body (10) being adapted for receiving the inserted pipe (30) for coupling; and one or more retaining means (12) provided inside the body (10), wherein the or each retaining means (12) comprises one or more retaining members (20) and at least part of the one or more retaining members (20) extends toward the inner surface (101) of the body (10) of the coupling (100) and is arranged to grip an inner surface (301) of the inserted pipe (30); **characterised in that** the retaining means (12) comprises one or more protruding tabs (18) secured to the inner surface (101) of the body (10) of the coupling (100).

2. A push fit pipe coupling (100) according to claim 1, wherein the retaining members (20) comprise an engaging end (22) that is spaced apart from the inner surface (101) of the body (10) of the coupling (100).

3. A push fit pipe coupling (100) according to claim 1 or 2, wherein the body (10) of the coupling (100) is substantially tubular.

4. A push fit pipe coupling (100) according to claim 3, wherein the body (10) of the coupling (100) is any of: straight; curved around approximately 90°; a shallower curve; a 'T' shape; or a cross shape.

5. A push fit pipe coupling (100) according to any preceding claim, wherein the body (10) of the coupling (100) is double-ended.

6. A push fit pipe coupling (100) according to any of claims 1 to 4, wherein the coupling (100) is integrally formed on the end of an existing pipe.

7. A push fit pipe coupling (100) according to any preceding claim, wherein the inner surface (101) of the body (10) of the coupling (100) is provided with a protruding shoulder or lip (102).

8. A push fit pipe coupling (100) according to any of claims 1 to 6, wherein the inner surface (101) of the body (10) of the coupling (100) is provided with a groove or indent.

9. A push fit pipe coupling (100) according any preceding claim, wherein the retaining members (20) comprise substantially hook shaped projections.

10. A push fit pipe coupling (100) according to any of claims 1 to 8, wherein the retaining means (12) comprises a single retaining member (20), wherein the retaining member (20) is a skirt extending axially and radially outward from the body (16) of the retaining means (12) toward the inner surface (101) of the body (10) of the coupling (100).

11. A push fit pipe coupling (100) according to any preceding claim, wherein the retaining means (12) comprises a ring from which the retaining members or member (20) project.

12. A push fit pipe coupling (100) according to any preceding claim, wherein the coupling (100) additionally comprises a sealing ring (14).

13. A push fit pipe coupling (100) according to claim 12, wherein the sealing ring (14) comprises an O-ring.

14. A push fit pipe coupling (100) according to claim 12 or 13, wherein the sealing ring (14) is provided on an internal shoulder or groove (103) of the coupling body (10).

15. A push fit pipe coupling according to any of claims 12 to 14, wherein the sealing ring dimensions are selected to enable a seal to be formed between the coupling (100) and an inserted pipe (30).

## Patentansprüche

1. Steckrohrkupplung (100) zum Sichern eines eingesteckten Rohres (30) in die Kupplung (100) vor einem Verkrimpen, wobei die Kupplung (100) aufweist:
- einen Körper (10) mit einer Innenfläche (101), wobei der Körper (10) zum Aufnehmen des eingesteckten Rohres (30) zum Kuppeln ausgebildet ist, und
- eine oder mehrere Halteeinrichtungen (12), welche innerhalb des Köpers (10) vorgesehen sind, wobei die oder jede Halteeinrichtung (12) ein oder mehrere Halteelemente (20) aufweist und zumindest ein Teil der einen oder der mehreren Halteeinrichtungen (20) sich zu einer Innenfläche (101) des Körpers (10) der Kupplung (100) erstreckt und ausgebildet ist, eine Innenfläche (301) des eingesetzten Rohres (30) zu fassen,
**dadurch gekennzeichnet,**
**dass** die Halteeinrichtung (12) eine oder mehr vorstehende Laschen (18) aufweist, welche an der Innenfläche (101) des Körpers (10) der Kupplung (100) befestigt sind.

2. Steckrohrkupplung (100) nach Anspruch 1,
wobei die Halteelemente (20) ein Beaufschlagungsende (22) aufweisen, welches beabstandet von der Innenseite (101) des Körpers (10) der Kupplung (100) ist.

3. Steckrohrkupplung (100) nach Anspruch 1 oder 2,
wobei der Körper (10) der Kupplung (100) im Wesentlichen rohrförmig ist.

4. Steckrohrkupplung (100) nach Anspruch 3,
wobei der Körper (10) der Kupplung (100) zumindest eine der folgenden Formen aufweist: gerade, gebogen um ungefähr 90°, eine flache Kurvenform, eine T-Form oder eine Kreuzform.

5. Steckrohrkupplung (100) nach einem der vorhergehenden Ansprüche,
wobei der Körper (10) der Kupplung (100) zweiendig ausgebildet ist.

6. Steckrohrkupplung (100) nach einem der einem der Ansprüche 1 bis 4,
wobei die Kupplung (100) einstückig an einem Ende eines bestehenden Rohres ausgebildet ist.

7. Steckrohrkupplung (100) nach einem der vorhergehenden Ansprüche, wobei die Innenfläche (101) des Körpers (10) der Kupplung (100) mit einer vorstehenden Schulter oder Lippe (102) versehen ist.

8. Steckrohrkupplung (100) nach einem der Ansprüche 1 bis 6,
wobei Innenseite (101) des Körpers (10) der Kupplung (100) mit einer Nut oder einer Einformung versehen ist.

9. Steckrohrkupplung (100) nach einem der vorhergehenden Ansprüche,
wobei die Halteelemente (20) im Wesentlichen hakenförmige Vorsprünge aufweisen.

10. Steckrohrkupplung (100) nach einem der Ansprüche 1 bis 8,
wobei die Halteelemente (12) ein einzelnes Halteelement (20) aufweisen, wobei das Halteelement (20) ein Bord ist, welches sich axial und radial von dem Körper (16) der Halteelemente (12) zu der Innenseite (101) des Körpers (10) der Kupplung (100) nach außen erstreckt.

11. Steckrohrkupplung (100) nach einem der vorhergehenden Ansprüche,
wobei die Halteeinrichtung (12) einen Ring aufweist, von welchem die Halteelemente oder das Halteelement (20) vorragen.

12. Steckrohrkupplung (100) nach einem der vorhergehenden Ansprüche,
wobei die Kupplung (100) zusätzlich einen Dichtring (14) aufweist.

13. Steckrohrkupplung (100) nach Anspruch 12,
wobei der Dichtring (14) einen O-Ring umfasst.

14. Steckrohrkupplung (100) nach Anspruch 12 oder 13,
wobei der Dichtring (14) an einer Innenschulter oder Nut (103) des Kupplungskörpers (10) vorgesehen ist.

15. Steckrohrkupplung (100) einem der Ansprüche 12 bis 14,
wobei die Dimensionen des Dichtrings ausgewählt sind, um eine Dichtung zu ermöglichen, welche zwischen der Kupplung (100) und dem eingesetzten Rohr (30) ausgebildet ist.

## Revendications

1. Accouplement (100) de tuyau enfichable pour fixer un tuyau (30) inséré dans l'accouplement (100) avant sertissage, l'accouplement (100) comprenant un corps (10), comprenant une surface (101) intérieure, le corps (10) étant conçu pour recevoir le tuyau (30) inséré pour accouplement, et un ou plusieurs moyens (12) de retenue, prévus à l'intérieur du corps (10), le ou chaque moyen (12) de retenue comprenant un ou plusieurs éléments (20) de retenue et au moins une partie du un ou des plusieurs éléments (20) de retenu s'étend en direction de la surface (101) intérieure du corps (10) de l'accouplement (100) et est agencée pour prendre une surface (301) intérieure du tuyau (30) inséré; **caractérisé en ce que** les moyens (12) de retenue comprennent un ou plusieurs ergots (18) en saillie, fixés à la surface (101) intérieure du corps (10) de l'accouplement (100).

2. Accouplement (100) de tuyau enfichable suivant la revendication 1, dans lequel les moyens (20) de retenue comprennent une extrémité (22) d'enclenchement, qui est à distance de la surface (101) intérieure du corps (10) de l'accouplement (100).

3. Accouplement (100) de tuyau enfichable suivant la revendication 1 ou 2, dans lequel le corps (10) de l'accouplement (100) est sensiblement tubulaire.

4. Accouplement (100) de tuyau enfichable suivant la revendication 3, dans lequel le corps (10) de l'accouplement (100) est l'un quelconque de : droit; courbé d'environ 90°; une courbe moins prononcée, une forme en 'T'; ou une forme en croix.

5. Accouplement (100) de tuyau enfichable suivant l'une quelconque des revendications précédentes, dans lequel le corps (10) de l'accouplement (100) est à double extrémité.

6. Accouplement (100) de tuyau enfichable suivant l'une quelconque des revendications 1 à 4, dans lequel l'accouplement (100) est formé d'une pièce sur l'extrémité d'un tuyau existant.

7. Accouplement (100) de tuyau enfichable suivant l'une quelconque des revendications précédentes, dans lequel la surface (101) intérieure du corps (10) de l'accouplement (100) est pourvue d'un épaulement ou d'une lèvre (102) en saillie.

8. Accouplement (100) de tuyau enfichable suivant l'une quelconque des revendications 1 à 6, dans lequel la surface (101) intérieure du corps (10) de l'accouplement (100) est pourvue d'une rainure ou d'un renfoncement.

9. Accouplement (100) de tuyau enfichable suivant l'une quelconque des revendications précédentes, dans lequel les éléments (20) de retenue comprennent des saillies sensiblement en forme de crochet.

10. Accouplement (100) de tuyau enfichable suivant l'une quelconque des revendications 1 à 8, dans lequel le moyen (12) de retenue comprend un élément (20) de retenue unique, dans lequel l'élément (20) de retenue est une jupe s'étendant axialement et radialement à l'extérieur du corps (16) du moyen (12) de retenue en direction de la surface (101) intérieure du corps (10) de l'accouplement (100).

11. Accouplement (100) de tuyau enfichable suivant l'une quelconque des revendications précédentes, dans lequel le moyen (12) de retenue comprend un anneau, dont sont issus les éléments ou l'élément (20) de retenue.

12. Accouplement (100) de tuyau enfichable suivant l'une quelconque des revendications précédentes, dans lequel l'accouplement (100) comprend en outre une bague (14) d'étanchéité.

13. Accouplement (100) de tuyau enfichable suivant la revendication 12, dans lequel la bague (14) d'étanchéité comprend un joint torique.

14. Accouplement (100) de tuyau enfichable suivant la revendication 12 ou 13, dans lequel la bague (14) d'étanchéité est prévue sur un épaulement ou une rainure (103) intérieure du corps (10) de l'accouplement.

15. Accouplement (100) de tuyau enfichable suivant l'une quelconque des revendications 12 à 14, dans lequel les dimensions de la bague d'étanchéité sont choisies pour permettre de former une étanchéité entre l'accouplement (100) et un tuyau (30) inséré.
